(19) Europäisches Patentamt
European Patent Office
Office européen des brevets

(11) **EP 2 822 190 A1**

(12) **EUROPEAN PATENT APPLICATION**
published in accordance with Art. 153(4) EPC

(43) Date of publication:
**07.01.2015 Bulletin 2015/02**

(51) Int Cl.:
**H04B 7/02** *(2006.01)*     **H04J 11/00** *(2006.01)*

(21) Application number: **13754845.9**

(22) Date of filing: **23.01.2013**

(86) International application number:
**PCT/JP2013/051300**

(87) International publication number:
**WO 2013/128983 (06.09.2013 Gazette 2013/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.02.2012 JP 2012040628**

(71) Applicant: **Mitsubishi Electric Corporation
Tokyo 100-8310 (JP)**

(72) Inventors:
• **UMEDA, Shusaku
Tokyo 100-8310 (JP)**
• **KATO, Yasunori
Tokyo 100-8310 (JP)**

(74) Representative: **Pfenning, Meinig & Partner GbR
Patent- und Rechtsanwälte
Theresienhöhe 11a
80339 München (DE)**

(54) **COMMUNICATION SYSTEM, TRANSMISSION DEVICE, AND RECEPTION DEVICE**

(57) In a DSTBC system, to obtain a communication system capable of estimating a transmission path without reducing a transmission capacity. The communication system includes a transmission device 10 and a reception device 20 that perform communication in the DSTBC system, in which the transmission device 10 performs, as a start symbol of DSTBC, the start symbol including known signals one of which has signal power and the other of which are set to signal power of zero and transmits the known signals to the reception device 20, and the reception device 20 independently estimates a transmission path between each of transmitting antennas of the transmission device 10 and a receiving antenna of the reception device 20 itself by using the space-time coded start symbol received from the transmission device 10, and decodes a reception signal with DSTBC decoding employing synchronous detection.

FIG.1

EP 2 822 190 A1

EP 2 822 190 A1

**Description**

Field

The present invention relates to a communication system that performs communication using DSTBC (Differential Space-Time Block Coding).

Background

Conventionally, in a DSTBC system, space-time block coding is performed to a modulated signal in which differential coding has been performed. Accordingly, while acquiring a transmission diversity, the DSTBC system makes it possible to detect the modulated signal with a transmission path estimation without using delay detection. However, because transmission is carried out by solely performing phase modulation in a relationship with differential coding, a transmission characteristic has limitations in a case where a multi-value modulation is employed.

With respect to the above mentioned problem, Patent Literature 1 listed below discloses a technique including: dividing a symbol group into two subgroups, and mapping phase modulation using one subgroup, and scaling phase modulated signals using the other subgroup, so that the multi-value modulation can be accomplished by carrying information on an amplitude difference together with a phase difference. Furthermore, Non Patent Literature 1 listed below discloses a technique including decoding a DSTBC signal using maximum-likelihood detection to demodulate a DSTBC modulated signal using QAM (Quadrature Amplitude Modulation).

Citation List

Patent Literature

Patent Literature 1: Japanese Patent No. 4181131

Non Patent Literature

Non Patent Literature 1: Meixia Tao, Roger S. Cheng, "Differential Space-Time Block Codes," IEEE Global Telecomm. Conf. Nov. 2001

Summary

Technical Problem

The above mentioned conventional communication techniques, however, employ delay detection. It is not applicable to a communication system employing synchronous detection, which has a larger communication channel capacity than the communication system employing the delay detection. Furthermore, the above-mentioned reference fails to disclose a method of estimating a transmission path that is necessary for a reception device in the case where the synchronous detection is employed. Therefore, in the case where the synchronous detection is employed, there has been such a problem that a transmission of a pilot signal is needed for estimating the transmission path on the side of the reception device. Thus, the transmission capacity thereof decrease accordingly.

In light of the foregoing, the present invention has been made. One of the objects of the present invention is to provide a communication system capable of estimating a transmission path without decreasing the transmission capacity in the DSTBC system.

Solution to Problem

To solve the forgoing problems and achieve the objects, a communication system in accordance with the present invention is provided. The communication system includes a transmission device and a reception device that perform communication in the DSTBC system, in which the transmission device performs, as a start symbol of DSTBC, the start symbol including known signals one of which has signal power and the other of which are set to signal power of zero and transmits the known signals to the reception device, and the reception device independently estimates a transmission path between each of transmitting antennas of the transmission device and a receiving antenna of the reception device itself by using the space-time coded start symbol received from the transmission device, and decodes a reception signal with DSTBC decoding employing synchronous detection.

Advantageous Effects of Invention

The embodiment of the present invention can achieve the improvement to estimate the transmission path without decreasing the transmission capacity in the DSTBC system.

Brief Description of Drawings

FIG. 1 is a diagram illustrating a configuration example of a communication system in accordance with a first embodiment.
FIG. 2 is a diagram illustrating operations of a space-time coding process by a DSTBC coding unit.
FIG. 3 is a diagram illustrating a configuration example of a communication system in accordance with a second embodiment.
FIG. 4 is a diagram illustrating a signal arrangement in a start symbol in accordance with the second embodiment.
FIG. 5 is a diagram illustrating a signal arrangement in a start symbol in accordance with a third embodiment.

Description of Embodiments

Exemplary embodiments of a communication system in accordance with the present invention will be described below in detail with reference to the accompanying drawings. The present invention is not limited to the embodiments.

First embodiment.

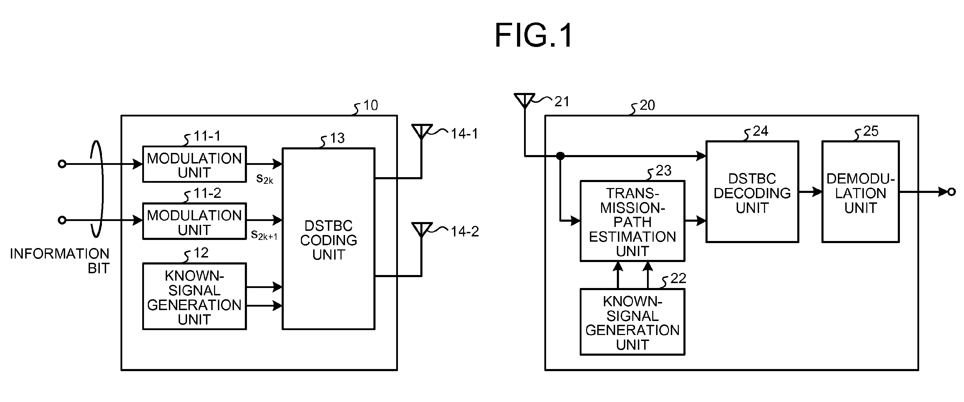

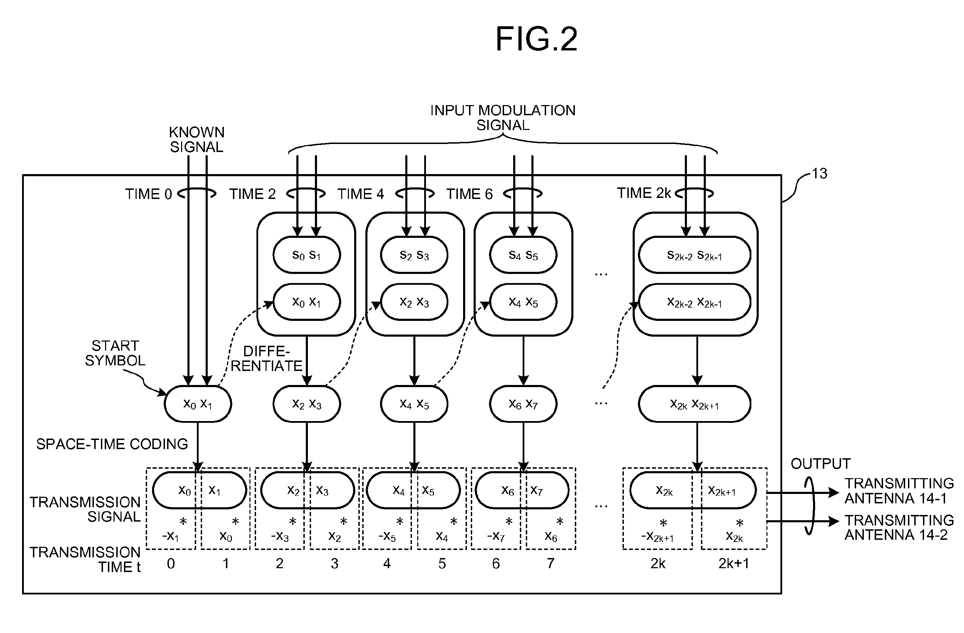

FIG. 1 is a diagram illustrating an example of a configuration of a communication system in accordance with a first embodiment of the present invention. The communication system is configured with a transmission device 10 and a reception device 20. Communication between the transmission device 10 and the reception device 20 is performed by the DSTBC system.
The transmission device 10 includes modulation units 11-1 and 11-2 that convert an information bit to a modulated signal and map it, a known-signal generation unit 12 that generates a start symbol using a known signal to be used in the DSTBC system, a DSTBC coding unit 13 that encodes the modulated signal in a DSTBC coding manner, and two transmitting antennas 14-1 and 14-2 that transmit the modulated signal which has been encoded in the DSTBC coding manner to the reception device 20. Only functions serving an important role in the descriptions of the present embodiment are described, and descriptions of general functions will be omitted. The same holds true for the reception device 20 to be described later and configurations in a second embodiment to be described later.
The reception device 20 includes a receiving antenna 21 that receives a transmission signal from the transmission device 10, a known-signal generation unit 22 that generates the same known-signal as that of the known-signal generation unit 12 of the transmission device 10, a transmission-path estimation unit 23 that estimates a transmission path by using a start symbol, a DSTBC decoding unit 24 that performs synchronous detection by using a transmission path estimation value to decode a differentiated signal, and a demodulation unit 25 that demodulates the modulated signal output from the DSTBC decoding unit 24.
Subsequently, a transmission process in the transmission device 10 is described. First, the modulation units 11-1 and 11-2 map to the modulated signals an information bit sequence that has been input. At this time, there is no restriction in a modulating method of signals.
The DSTBC coding unit 13 encodes the modulated signal in the differential space-time coding manner with two modulated signals that has been input from the modulation units 11-1 and 11-2. FIG. 2 depicts process of the space-time coding with the DSTBC coding unit 13. The DSTBC coding unit 13 inputs start symbols $(x_0, x_1)$ generated with the known-signal generation unit 12 at a time 0, and encodes the start symbols $(x_0, x_1)$ in the space-time coding manner.
Specifically, the DSTBC coding unit 13 outputs transmission signals $(x_0, -x_1{}^*)$ at the time 0 and transmission signals $(x_1, x_0{}^*)$ at a time 1 to the transmitting antennas 14-1 and 14-2, respectively. It should be noted that notation "*" denote a complex conjugate. Subsequently, the DSTBC coding unit 13 encodes modulated signals (so, $s_1$) in the DSTBC coding manner as indicated in the following equation (1) at a time 2 using the start symbols $(x_0, x_1)$. Furthermore, the DSTBC coding unit 13 outputs transmission signals $(x_2, -x_3{}^*)$ at the time 2 and transmission signals $(x_3, x_2{}^*)$ at a time 3 to the transmitting antennas 14-1 and 14-2, respectively.

[Equation 1]

$$\begin{bmatrix} x_2 \\ x_3 \end{bmatrix} = \begin{bmatrix} x_0 & -x_1^* \\ x_1 & x_0^* \end{bmatrix} \begin{bmatrix} s_0 \\ s_1 \end{bmatrix} \qquad \cdots (1)$$

Hereinafter, the DSTBC coding unit 13 similarly encodes an input modulated signals $(s_{2k-2}, s_{2k-1})$ in the DSTBC coding manner as indicated in the following equation (2) at a time 2k by using transmission signals $(x_{2k-2}, x_{2k-1})$ that have been transmitted at times 2k-2 and 2k-1. Furthermore, the DSTBC coding unit 13 outputs transmission signals $(x_{2k}, -x_{2k+1}^*)$ at the time 2k and transmission signals $(x_{2k+1}, x_{2k}^*)$ at a time 2k+1 to the transmitting antennas 14-1 and 14-2, respectively.
[Equation 2]

$$\begin{bmatrix} x_{2k} \\ x_{2k+1} \end{bmatrix} = \begin{bmatrix} x_{2k-2} & -x_{2k-1}^* \\ x_{2k-1} & x_{2k-2}^* \end{bmatrix} \begin{bmatrix} s_{2k-2} \\ s_{2k-1} \end{bmatrix} \qquad \cdots (2)$$

The transmitting antennas 14-1 and 14-2 transmit signals input from the DSTBC coding unit 13, which have been encoded in the manner of the space-time coding process, to the reception device 20 at the times mentioned above. For example, where at the time 0, the transmission signals $(x_0, -x_1^*)$, the transmitting antenna 14-1 and 14-2 transmits the transmission signal $x_0$ and $-x_1^*$, respectively.

Here, with respect to the known-signals $(x_0, x_1)$ that are the start symbols generated with the known-signal generation unit 12, the transmission device 10 makes one symbol to have signal power, and the other symbol to have transmission power of 0. With this configuration, in the transmission device 10, only one of the two transmitting antennas 14-1 and 14-2 transmits a signal as the start symbol either at the time 0 or at the time 1. For example, in a case where the transmission power of $x_0$ is set to zero, the transmitting antennas 14-1 and 14-2 transmit transmission signals $(0, -x_1^*)$ at the time 0, respectively. The transmitting antennas 14-1 and 14-2 transmit transmission signals $(x_1, 0)$ at the time 1, respectively. In accordance with this configuration, in the transmission device 10, at the time 0 only the transmitting antenna 14-2 transmits the signal, and at the time 1 only the transmitting antenna 14-1 transmits the signal.

Subsequently, a reception process in the reception device 20 is described. In the reception device 20, at the time 0 and at the time 1, the receiving antenna 21 receives signals transmitted from the transmission device 10 and the transmission-path estimation unit 23 estimates a transmission path by using the received signal that has the start symbol and a known-signal generated by the known-signal generation unit 22, in which the start signal is the same as the known-signal.

Because at the time 0 and at the time 1, only one of the transmitting antennas 14-1 and 14-2 transmits the signal from the transmission device 10 the transmission-path estimation unit 23 can independently estimate transmission path information between the transmitting antennas 14-1 and 14-2 of the transmission device 10 and the receiving antenna 21 of the reception device 20. For example, in a case where the transmission power of $x_0$ is set to zero, the transmission-path estimation unit 23, at the time 0, estimates the transmission path reaching the transmitting antenna 14-2, and at the time 1, estimates the transmission path reaching the transmitting antenna 14-1..

In the reception device 20, the DSTBC decoding unit 24 decodes the received signals to obtain the modulated signal, by performing the synchronous detection to the received signals at the time 2 or later with an estimated value of the transmission path , and then performing differentiation. The demodulation unit 25 demodulates the modulated signals that have been decoded. In accordance with this configuration, the reception device 20 can detect a desired information bit.

As described above, in accordance with the present embodiment, with respect to the known-signals $(x_0, x_1)$ that are the start symbols, the transmission device 10 makes one symbol to have signal power, and the other symbol to have transmission power of 0. Only one of the two transmitting antennas 14-1 and 14-2 transmits a signal as a start symbol at the time 0 and at the time 1. The transmission-path estimation unit 23 in the reception device 20 estimates a transmission path by using the received signals each of which has the start symbol at the time 1 or the start symbol at the time 2. In accordance with this configuration, while achieving the DSTB system, the reception device 20 can estimate the transmission path with the start symbol. Furthermore, the reception device 20 can detect a desired information bit that has been first transmitted from the transmission device 10 by demodulating the modulated signal that has been decoded. As described above, in the communication system in accordance with the present embodiment, a transmission capacity can be improved by using the synchronous detection that has a larger communication channel capacity than the delay detection.

In the present embodiment, two transmitting antennas has been described; however, the number of the transmitting antennas is not limited thereto. In a case where the number of the transmitting antennas is three or more, each of transmission paths between the transmission antenna and the receiving antenna can be independently estimated by performing a similar operation. For example, if the number of the transmitting antennas is three, on the transmission device side, when the start symbols are transmitted at the time 0, at the time 1 and at the time 2, only one transmitting antenna among three transmitting antennas transmits a signal at one time of those times, and each power of signals transmitted from the transmission antennas other than the only one transmission antenna is set to zero. In accordance with this configuration, the reception device can estimate information of the transmission path between the receiving antenna and each of transmitting antennas.

Similar effects can be achieved even when antenna transmits a signal whose power is in a range of degree that an estimation error occurred does not propagate when performing estimation of a transmission path at a time the start symbol is transmitted, which will be described later in a second embodiment.

Second embodiment.

In the second embodiment of the present invention, a case where DSTBC transmission and reception use an OFDM (Orthogonal Frequency Division Multiplexing) signal is described. Points where the configuration differs from the first embodiment are mainly described below.

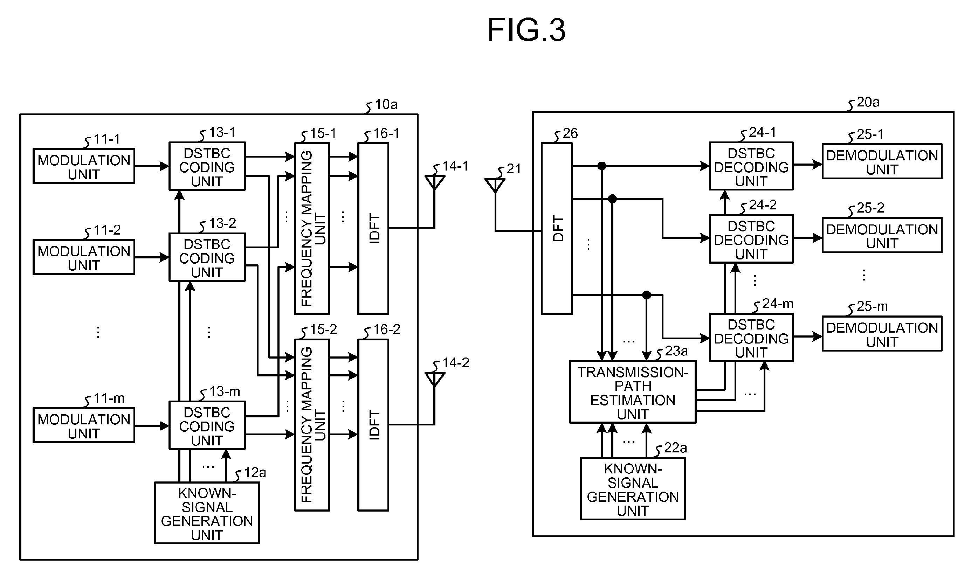

FIG. 3 is a configuration example of a communication system in accordance with the present embodiment. The communication system is configured by a transmission device 10a and a reception device 20a. Communication is performed by the DSTBC system using the OFDM signal between the transmission device 10a and the reception device 20a.

The transmission device 10a includes modulation units 11-1, 11-2, ..., 11-m that convert an information bit to modulated signals and map the modulated signals, a known-signal generation unit 12a that generates known signals for each of frequency subcarriers, DSTBC coding units 13-1, 13-2, ..., 13-m that encode the modulated signals in the DSTBC coding manner for each of frequency subcarriers, frequency mapping units 15-1 and 15-2 that perform frequency mapping to a DSTBC signal in a frequency domain, inverse-discrete Fourier transform units 16-1 and 16-2 that perform inverse discrete Fourier transform to the signals that have been frequency mapped to form OFDM signals, and two transmitting antennas 14-1 and 14-2 that transmit the OFDM signals to the reception device 20a.

The reception device 20a includes the receiving antenna 21 that receives a transmission signal from the transmission device 10a, a discrete Fourier transform unit 26 that transforms signals in a time domain to signals in a frequency domain, a known-signal generation unit 22a that generates the same known signal as of the know signal generated by the known-signal generation unit 12a in the transmission device 10a, a transmission-path estimation unit 23a that estimates a transmission path by using a start symbol, DSTBC decoding units 24-1, 24-2, ..., 24-m that decode the DSTBC signals for each of frequency subcarriers by using the estimated value of the transmission path , and demodulation units 25-1, 25-2, ..., 25-m that demodulates, for each of frequency subcarriers, the modulated signal output from each of the DSTBC decoding units 24-1, 24-2, ..., 24-m.

Subsequently, a transmission process in the transmission device 10a is described. First, the modulation units 11-1, 11-2, ..., 11-m map an input information bit sequence to modulated signals.

The DSTBC coding units 13-1, 13-2, ..., 13-mencode the modulated signals that have been mapped by the modulation units 11-1, 11-2, ..., 11-m in the DSTBC manner for each of frequency subcarriers. Specifically, in the DSTBC coding units 13-1, 13-2, ..., 13-m, the transmission signals of an n-th subcarriers to be transmitted at the time 2k and at the time 2k+1 can be derived from the following equation (3). Accordingly, in the transmission device 10a, it is possible to deem that each of the DSTBC coding units 13-1, 13-2, ..., 13-m for each of frequency subcarriers is equivalent to the DSTBC coding unit 13 of the first embodiment (see FIG. 2).

[Equation 3]

$$\begin{bmatrix} x_{n,2k} \\ x_{n,2k+1} \end{bmatrix} = \begin{bmatrix} x_{n,2k-2} & -x_{n,2k-1}^{*} \\ x_{n,2k-1} & x_{n,2k-2}^{*} \end{bmatrix} \begin{bmatrix} s_{n,2k-2} \\ s_{n,2k-1} \end{bmatrix} \qquad \cdots (3)$$

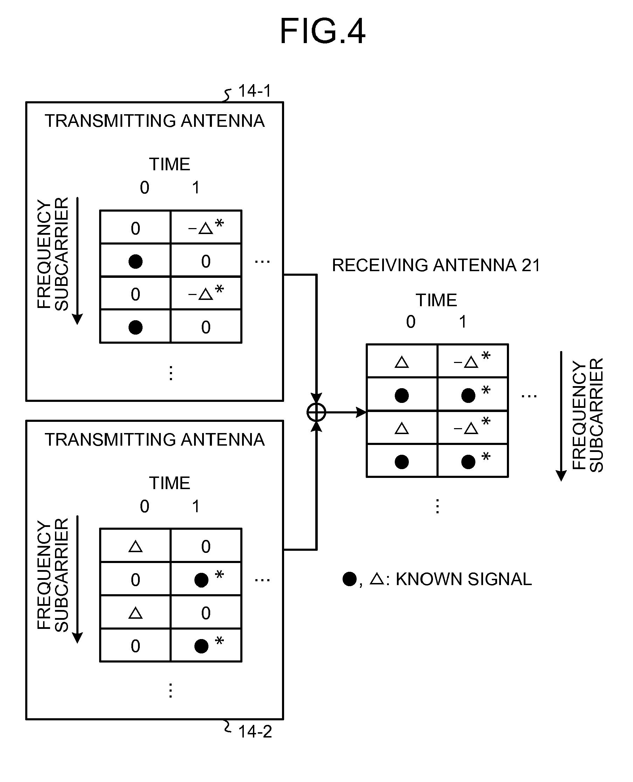

Here, configurations of the transmission signals for each of frequency subcarriers are shown in FIG. 4. FIG. 4 depicts a signal arrangement represented with a start symbol that is transmitted by the transmission device 10a and is received by the reception device 20a in accordance with the present embodiment. In each of antennas and in each of frequency subcarriers, the frequency mapping units 15-1 and 15-2 insert a symbol having signal power at only one time of the time 0 and the time 1 when the start symbols are transmitted, and set signal power of a symbol at the other time to zero. Furthermore, the frequency mapping units 15-1 and 15-2 arrange symbols for each of frequency subcarriers such that times when the symbol having signal power is inserted by each of transmitting antennas do not encounter. Furthermore, the inverse-discrete Fourier transform units 16-1 and 16-2 perform an inverse discrete Fourier transform to signals that have been frequency mapped to form OFDM signals, and the transmitting antennas 14-1 and 14-2 transmit the OFDM signals to the reception device 20a. As a result, in the reception device 20a, only one transmitting antenna of all the transmitting antennas transmits the signal at the time for each of frequency subcarriers, and each of transmitting antennas transmits signals at any time. At the time 2 or later, by performing for each of subcarriers operations similar to the first embodiment, the OFDM transmission using the DSTBC system can be achieved.

Subsequently, reception process in the reception device 20a is described. In the reception device 20a, the receiving antenna 21 receives the OFDM signal from the transmission device 10a. As shown in FIG. 4, the reception signals can be received as the known signals in the start symbols. In the reception device 20a, the discrete Fourier transform unit 26 performs discrete Fourier transform to the received OFDM signals to acquire the start symbols that have been encoded in the space-time coded manner for each of frequency subcarriers. Furthermore, the transmission-path estimation unit 23a estimates the transmission path for each of antennas and for each of frequency subcarriers by using the start symbols and the known signals generated by the known-signal generation unit 22a, which is the same as the known signals of the transmission device 10a. In accordance with a configuration of the start symbols described above, the transmission-path estimation unit 23a can estimate the transmission path independently for each of frequency subcarriers and for each of transmitting antennas.

In the reception device 20a, the DSTBC decoding units 24-1, 24-2, ..., 24-m decode the received signals by performing the synchronous detection with the estimated value of the transmission path. Then, the demodulation units 25-1, 25-2, ..., 25-m demodulate the modulated signals that have been decoded. In accordance with this configuration, a desired information bit can be detected in the reception device 20a.

As described above, in accordance with the present embodiment, for each of antennas and for each of frequency subcarriers, the transmission device 10a inserts the symbol having signal power at only one time of the time 0 and the time 1 when the start symbols are transmitted, and sets signal power of the symbol at the other time to zero. Furthermore, the transmission device 10a arranges the symbols for each of frequency subcarriers such that times when the symbol having signal power is inserted by each of transmitting antennas do not encounter, and transmits the start symbols. In the reception device 20a, the transmission path is estimated by using the received start symbols for each of antennas and for each of frequency subcarriers. In accordance with this configuration, also in a case where the OFDM signal is used, the transmission path estimation and the synchronous detection can be employed while achieving the DSTBC system in the reception device 20a. As a result, improvement similar to that of the first embodiment can be obtained.

Similarly to the first embodiment, even when the number of the transmitting antennas is set to three or more, improvement can be obtained. Furthermore, the configuration of the start symbols shown in FIG. 4 is one example. Similar effectiveness can be obtained with configurations other than configuration illustrated in FIG.4. There is no influence to the effectiveness even if any kinds of known signals were used as the start symbol.

Third embodiment.

In a third embodiment of the present invention, in the start symbols, data symbols are inserted into a portion of frequency subcarriers. Points where the configuration differs from the second embodiment are mainly described below.

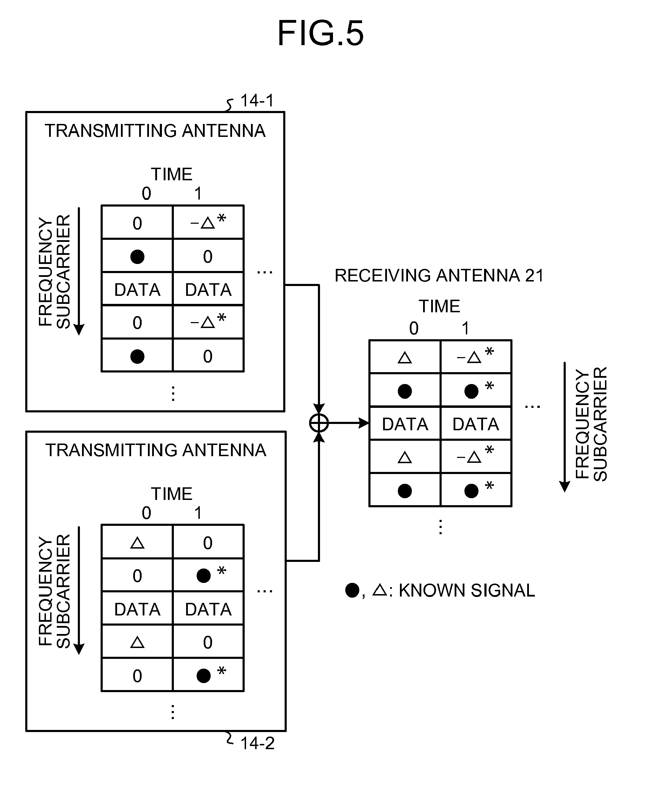

A configuration of a communication system in accordance with the present embodiment is the same as that of the second embodiment (see FIG. 3). In the present embodiment, it is assumed that the start symbols are transmitted by the transmission device 10a and are received by the reception device 20a as shown in FIG. 5. FIG. 5 depicts a signal arrangement in the start symbols that are transmitted by the transmission device 10a and are received by the reception device 20a in accordance with the present embodiment. In the second embodiment (see FIG. 4), the known signals are inserted into all the frequency subcarriers. However, in the present embodiment, as shown in FIG. 5, data symbols are inserted into a portion of frequency subcarriers, and the known signals are inserted into the frequency subcarriers other than the portion of frequency subcarriers.

The reception device 20a detect a signal with the frequency subcarriers into which the data symbols are inserted, by: compensating the transmission path information of the frequency subcarriers to estimate the transmission path based on the estimated value of the transmission path the other frequency subcarriers into which the known signals are inserted; deeming the data symbol as a space-time code; and using the synchronous detection. Other operations of transmission and reception in the transmission device 10a and the reception device 20a are similar to those of the second embodiment.

As described above, in accordance with the present embodiment, in the start symbol, the transmission device 10a inserts the known signals into a portion of frequency subcarriers, and inserts data symbols into frequency subcarriers other than the portion of frequency subcarriers. The reception device 20a estimates the transmission path for the frequency subcarriers into which the data symbols are inserted, by using the estimated value of the transmission path the other frequency subcarriers into which the known signals are inserted.

Accordingly, while achieving improvement similar to the second embodiment, a transmission path capacity can be increased.

As described above, the communication system in accordance with the present invention is useful in wireless communication and is particularly suitable for communication in the DSTBC system.

Reference Signs List

10, 10a transmission device, 11-1 to 11-m modulation unit, 12, 12a known-signal generation unit, 13, 13-1 to 13-m DSTBC coding unit, 14-1, 14-2 transmitting antenna, 15-1, 15-2 frequency mapping unit, 16-1, 16-2 inverse-discrete Fourier transform unit, 20, 20a reception device, 21 receiving antenna, 22, 22a known-signal generation unit, 23, 23a transmission-path estimation unit, 24, 24-1 to 24-m DSTBC decoding unit, 25, 25-1 to 25-m demodulation unit.

**Claims**

1. A communication system comprising a transmission device and a reception device, the communication being performed in a DSTBC (Differential Space-Time Block Coding) system, wherein
   the transmission device encodes start symbols of the DSTBC in a space-time coding manner, the start symbol including known signals one of which has signal power and the other of which has signal power of zero, and transmits space-time coded start symbols to the reception device, and
   the reception device independently estimates a transmission path between each of transmitting antennas of the transmission device and a receiving antenna of the reception device by using the space-time coded start symbols received from the transmission device, and decodes a reception signal with DSTBC decoding employing synchronous detection.

2. The communication system according to claim 1, wherein the transmission device includes:

   a transmission-side known-signal generation unit configured to generate, as a start bit for DSTBC, the known signals one of which has signal power and the other of which has signal power of zero;
   a DSTBC coding unit configured to perform DSTBC coding by using the start bit and a modulated signal in which an information bit is mapped; and
   two or more transmitting antennas configured to transmit a signal that DSTBC coding has been made to the reception device, and
   the reception device includes:

   a receiving antenna configured to receive a signal from the transmission device;
   a reception-side known-signal generation unit configured to generate the same known signals as the known signals generated by the transmission-side known-signal generation unit;
   a transmission-path estimation unit configured to independently estimate a transmission path between each of the transmitting antennas and the receiving antenna by using the DSTBC coded start symbols included in the reception signal and the known signals generated by the reception-side known-signal generation unit, and
   a DSTBC decoding unit configured to perform DSTBC decoding to the reception signal with a transmission path estimation result in the transmission-path estimation unit employing the synchronous detection.

3. A communication system comprising a transmission device and a reception device, the communication being performed in a DSTBC (Differential Space-Time Block Coding) system, wherein
   the transmission device inserts, as a start symbol of the DSTBC, a symbol having signal power at only one time of times when a start symbol is transmitted via each of antennas and in each of frequency subcarriers, sets signal power of a symbol at the other time of the times to zero, encodes an OFDM (Orthogonal Frequency Division Multiplexing) signal in which a symbol is arranged for each of frequency subcarriers such that times when the symbol having signal power is inserted in a signal transmitted via each of transmitting antennas do not encounter, and transmits the OFDM signal to the reception device, and
   the reception device independently estimates a transmission path between each of transmitting antennas of the transmission device and a receiving antenna of the reception device itself for each of frequency subcarriers by using the space-time coded start symbols received from the transmission device, and decodes a reception signal with DSTBC decoding employing synchronous detection.

4. The communication system according to claim 3, wherein the transmission device includes:

a transmission-side known-signal generation unit configured to generate a known signal for each of frequency subcarriers as a start bit for the DSTBC;

a plurality of DSTBC coding units configured to perform DSTBC coding by using the start bit and a modulated signal in which information bit is mapped;

a frequency mapping unit configured to perform frequency mapping to the DSTBC coded signal input from the plurality of DSTBC coding units;

an inverse-discrete Fourier transform unit configured to generate an OFDM signal from a frequency domain signal that has been frequency mapped; and

two or more transmitting antennas configured to transmit the OFDM signal to the reception device; wherein

the frequency mapping unit inserts a symbol having signal power at only one time of times when a start symbol is transmitted for each of frequency subcarriers transmitted via each of transmitting antennas, sets signal power of the symbol at the other time of the times to zero, arranges the symbol such that times when a symbol having signal power is inserted in a signal transmitted via each of transmitting antennas for each of frequency subcarriers do not encounter, and outputs the start bit to the inverse-discrete Fourier transform unit, the reception device includes:

> a receiving antenna configured to receive a signal from the transmission device;
> a discrete Fourier transform unit configured to generate a frequency domain signal from a reception signal of the OFDM signal;
> a reception-side known-signal generation unit configured to generate the same known signal as known signal of the transmission-side known-signal generation unit;
> a transmission-path estimation unit configured to independently estimates a transmission path between each of the transmitting antennas and the receiving antenna for each of frequency subcarriers by using the DSTBC coded start symbol included in a reception signal and a known signal generated by the reception-side known-signal generation unit; and
> a DSTBC decoding unit configured to perform DSTBC decoding to the reception signal with a transmission path estimation result in the transmission-path estimation unit employing synchronous detection.

5. The communication system according to claim 3, wherein
the transmission device inserts data symbols into a portion of frequency subcarriers in the start symbol, and
the reception device estimates a transmission path, for frequency subcarriers in which data symbols are arranged, by using estimated values of transmission path of other frequency subcarriers in which known signals are arranged.

6. The communication system according to claim 4, wherein
the frequency mapping unit arranges data symbols in a portion of frequency subcarriers, and
the transmission-path estimation unit estimates a transmission path, for frequency subcarriers in which data symbols are arranged, by using estimated values of transmission path of other frequency subcarriers in which known signals are arranged.

7. A transmission device for performing communication in a DSTBC (Differential Space-Time Block Coding) system and configuring a communication system together with a reception device, the transmission device encoding start symbols of the DSTBC in a space-time coding manner, the start symbol including known signals one of which has signal power and the other of which has signal power of zero, and transmits space-time coded start symbols to the reception device.

8. The transmission device according to claim 7, comprising:

> a transmission-side known-signal generation unit configured to generate, as a start bit for DSTBC, known signals one of which has signal power and the other of which are set to signal power of zero;
> a DSTBC coding unit configured to perform DSTBC coding by using the start bit and a modulated signal in which an information bit is mapped; and
> two or more transmitting antennas configured to transmit a signal that has been DSTBC coded to the reception device.

9. A transmission device for performing communication in a DSTBC (Differential Space-Time Block Coding) system and configuring a communication system together with a reception device, the transmission device inserting, as a start symbol of the DSTBC, a symbol having signal power at only one time of times when a start symbol is transmitted via each of antennas and for each of frequency subcarriers, setting signal power of a symbol at the other time of the times to zero, encoding in space-time coding manner an OFDM (Orthogonal Frequency Division Multiplexing) signal in which a symbol is arranged for each of frequency subcarriers such that times when a symbol having signal power is inserted in a signal transmitted via each of transmitting antennas do not encounter, and transmitting the OFDM signal to the reception device.

10. The transmission device according to claim 9, comprising:

a transmission-side known-signal generation unit configured to generate a known signal for each of frequency subcarriers as a start bit for the DSTBC;
a plurality of DSTBC coding units configured to perform DSTBC coding by using the start bit and a modulated signal in which an information bit is mapped;
a frequency mapping unit configured to perform frequency mapping to a DSTBC coded signal input from the plurality of DSTBC coding units;
an inverse-discrete Fourier transform unit configured to generate an OFDM signal from a frequency domain signal that has been frequency mapped; and
two or more transmitting antennas configured to transmit the OFDM signal to the reception device, wherein
the frequency mapping unit inserts a symbol having signal power at only one time of times when a start symbol is transmitted for each of frequency subcarriers transmitted via each of transmitting antennas, sets signal power of a symbol at the other time to zero, arranges a symbol for each of frequency subcarriers such that times when a symbol having signal power is inserted in a signal transmitted via each of transmitting antennas do not encounter, and outputs the start bit to the inverse-discrete Fourier transform unit.

11. The transmission device according to claim 9, wherein data symbols are inserted into a portion of frequency subcarriers in the start symbol.

12. The transmission device according to claim 10, wherein the frequency mapping unit arranges data symbols in a portion of frequency subcarriers.

13. A reception device for performing communication in a DSTBC (Differential Space-Time Block Coding) system and configuring a communication system together with a transmission device, wherein
when the transmission device encodes start symbols of the DSTBC in a space-time coding manner, the start symbol including known signals one of which has signal power and the other of which has signal power of zero, and transmits space-time coded start symbols to the reception device, the reception device independently estimates a transmission path between each of transmitting antennas of the transmission device and a receiving antenna of the reception device itself by using the space-time coded start symbol received from the transmission device, and decodes a reception signal with DSTBC decoding employing synchronous detection.

14. The reception device according to claim 13, comprising:

a receiving antenna configured to receive a signal from the transmission device;
a reception-side known-signal generation unit configured to generate the same known signal as known signal of the transmission device;
a transmission-path estimation unit configured to independently estimate a transmission path between the receiving antenna and each of two or more transmitting antennas included in the transmission device by using the DSTBC coded start symbol included in the reception signal and the known signal generated by the reception-side known-signal generation unit; and
a DSTBC decoding unit configured to perform DSTBC decoding to the reception signal with a transmission path estimation result in the transmission-path estimation unit employing synchronous detection.

15. A reception device for performing communication in a DSTBC (Differential Space-Time Block Coding) system and configuring a communication system together with a transmission device, wherein
when the transmission device inserts, as a start symbol of the DSTBC, a symbol having signal power at only one time of times when a start symbol is transmitted via each of antennas and for each of frequency subcarriers, sets signal power of a symbol at the other time of the times to zero, encodes in a space-time coding manner an OFDM (Orthogonal Frequency Division Multiplexing) signal in which a symbol is arranged for each of frequency subcarriers such that times when a symbol having signal power is inserted in a signal transmitted via each of transmitting antennas do not encounter, and transmits the OFDM signal, the reception device independently estimates a transmission path between each of transmitting antennas of the transmission device and a receiving antenna of the reception device itself for each of frequency subcarriers by using the space-time coded start symbol received from the transmission device, and decodes a reception signal with DSTBC decoding employing synchronous detection.

16. The reception device according to claim 15, comprising:

a receiving antenna configured to receive a signal from the transmission device;
a discrete Fourier transform unit configured to generate a frequency domain signal from a reception signal of an OFDM signal;
a reception-side known-signal generation unit configured to generate the same known signal as known signal of the transmission device;
a transmission-path estimation unit configured to independently estimates a transmission path between each of two or more transmitting antennas included in the transmission device and the receiving antenna for each of frequency subcarrier by using the DSTBC coded start symbol included in the reception signal and the known signal generated by the reception-side known-signal generation unit; and
a DSTBC decoding unit configured to perform DSTBC decoding to a reception signal with a transmission path estimation result in the transmission-path estimation unit employing synchronous detection.

17. The reception device according to claim 15, wherein when the transmission device inserts data symbols into a portion of frequency subcarriers in the start symbol, for frequency subcarriers in which data symbols are arranged, a transmission path is estimated by using estimated values of transmission path of other frequency subcarriers in which known signals are arranged.

18. The reception device according to claim 16, wherein when the transmission device inserts data symbols into a portion of frequency subcarriers in the start symbol, for frequency subcarriers in which data symbols are arranged, the transmission-path estimation unit estimates a transmission path by using estimated values of transmission path of other frequency subcarriers in which known signals are arranged.

FIG.1

# FIG.2

KNOWN SIGNAL

INPUT MODULATION SIGNAL

13

TIME 0   TIME 2   TIME 4   TIME 6   TIME 2k

$s_0\ s_1$   $s_2\ s_3$   $s_4\ s_5$   $s_{2k-2}\ s_{2k-1}$

$x_0\ x_1$   $x_2\ x_3$   $x_4\ x_5$   $x_{2k-2}\ x_{2k-1}$

START SYMBOL

DIFFE-RENTIATE

$x_0\ x_1$   $x_2\ x_3$   $x_4\ x_5$   $x_6\ x_7$   $x_{2k}\ x_{2k+1}$

SPACE-TIME CODING

TRANSMISSION SIGNAL

| $x_0$ | $x_1$ | $x_2$ | $x_3$ | $x_4$ | $x_5$ | $x_6$ | $x_7$ | $x_{2k}$ | $x_{2k+1}$ |
| $-x_1^*$ | $x_0^*$ | $-x_3^*$ | $x_2^*$ | $-x_5^*$ | $x_4^*$ | $-x_7^*$ | $x_6^*$ | $-x_{2k+1}^*$ | $x_{2k}^*$ |

OUTPUT

TRANSMITTING ANTENNA 14-1

TRANSMITTING ANTENNA 14-2

TRANSMISSION TIME t:  0   1   2   3   4   5   6   7   2k   2k+1

EP 2 822 190 A1

12

# FIG.3

EP 2 822 190 A1

# FIG.4

●, △: KNOWN SIGNAL

# FIG.5

**INTERNATIONAL SEARCH REPORT**

| International application No. |
|---|
| PCT/JP2013/051300 |

A. CLASSIFICATION OF SUBJECT MATTER
*H04B7/02*(2006.01)i, *H04J11/00*(2006.01)i

According to International Patent Classification (IPC) or to both national classification and IPC

B. FIELDS SEARCHED

Minimum documentation searched (classification system followed by classification symbols)
H04B7/02, H04J11/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2009-303086 A (Hitachi Kokusai Electric Inc.),<br>24 December 2009 (24.12.2009),<br>fig. 1, 3; paragraphs [0015] to [0026]<br>(Family: none) | 1,2,7-9,13,<br>14<br>3-6,10-12,<br>15-18 |
| Y | JP 2004-64240 A (Sony Corp.),<br>26 February 2004 (26.02.2004),<br>fig. 6, 10, 14; paragraph [0046]<br>(Family: none) | 1,2,7-9,13,<br>14 |
| A | WO 2007/082614 A1 (SIEMENS AG),<br>26 July 2007 (26.07.2007),<br>entire text; all drawings<br>& US 2009/0220027 A1 & DE 102006002696 A<br>& CN 101455044 A | 1-18 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 February, 2013 (21.02.13) | 05 March, 2013 (05.03.13) |

| Name and mailing address of the ISA/<br>Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4181131 B

**Non-patent literature cited in the description**

- **MEIXIA TAO ; ROGER S. CHENG.** Differential Space-Time Block Codes. *IEEE Global Telecomm. Conf.,* November 2001